# EUROPEAN PATENT APPLICATION

(11) **EP 1 327 669 A1**
(43) Date of publication of application: **16.07.2003**
(21) Application number: 02251591.0
(22) Date of filing: 06.03.2002
(51) Int. Cl.: C09D 167/06, C09D 5/03

(54) **Low gloss powder coating**

(30) Priority: 09.01.2002 US 40384
(71) Applicant: ROHM AND HAAS COMPANY, Philadelphia, Pennsylvania 19106-2399 (US)
(72) Inventor: Daly, Andrew Thomas, Sinking Spring, Pennsylvania 19608 (US); Haley, Richard Paul, Reading, Pennsylvania 19607 (US); Knaub, James R., Spring Grove, Pennsylvania 17362 (US); Seelig, Carryll A., Reading, Pennsylvania 19605 (US); Shah, Navin B., Sinking Spring, Pennsylvania 19608 (US); Tullos, Gordon L., Reading, Pennsylvania 19606 (US)
(74) Representative: Kent, Venetia Katherine

(57) **Abstract**

A melt extrudable low temperature curable powder coating composition for application onto heat sensitive substrates. The final cured coating produces a low gloss finish on the target substrate. The composition consists of an unsaturated polyester resin combined with a glycidyl functional acrylic resin, a crystalline or semi-crystalline polycarboxylic acid or anhydride and a free radical initiator. Optionally, if a harder, more wear-resistant surface is desired, the cure may be catalyzed by either a photoinitiator or a redox compound.

## Description

The present invention relates to a powder coating composition and use thereof on heat-sensitive substrates, such as wood products, which provides a low gloss finish having a significantly harder surface texture for improved weather resistance. It is surprising to combine these features into a coating powder which must cure rapidly at lower than normal temperatures so as to not adversely affect the structural integrity of the heat sensitive substrate onto which the coating is applied.

### BACKGROUND

In the surface coating industry, powder coatings are becoming increasingly more popular than traditional liquid based coatings for a number of reasons. Foremost of which is that fact that powder coatings are virtually free of the potentially harmful volatile organic solvents which act as carriers in liquid surface finishes. The positive result is that little if any vapors escape during the application and curing processes. The reduction in solvent emissions benefits the health of the workers employed in the coating operations as well as minimizing the negative impact on the environment in general. Furthermore, in the event of handling mishaps, powder is much easier to clean up. Another advantage is that "oversprayed" material is easily recyclable. This aids in manufacturing productivity and significantly reduces non-recyclable waste material.

Notwithstanding the above identified advantages, powder coating compositions and their application processes come with certain disadvantages. The application of coatings onto heat sensitive substrates, such as wood, wood-based and plastic materials is difficult because of the sensitivity that these materials have to exposure to high heat for short durations of time or lower temperatures for much longer periods of time. Traditional powder coating formulations require high cure temperatures, making them unsuitable for use on heat sensitive substrates. Much focus today is on the formulation of powder coatings which will readily provide a thermoset cure without damaging the sensitive substrates. The difficulty is in incorporating into the finish coating various desirable properties while at the same time having to work within the boundaries necessitated by the sensitivities of formulating, applying (in order to provide the required surface flow) and curing a powder coating onto heat sensitive substrates.

Recently, low temperature curable powder coatings have been developed using epoxy resins. However, the traditional curing agents used with epoxy resins are derived from aliphatic or aromatic amines which tend to yellow with the addition of heat. Further, epoxy coatings alone generally do not provide adequate surface durability and weatherability.

Another resin which has been employed with powder coatings is based upon unsaturated polyesters. These materials provide good weatherability and are extremely reactive at low temperatures, making them suitable for use on heat sensitive substrates. However, the free-radical polymerization system used to cure unsaturated polyesters is easily inhibited along the surface of the coating which is in contact with air. Oxygen in the atmosphere interferes with the free-radical process of cross-linking the unsaturated polyester chains leaving the surface of the coating uncured. The surface, therefore, exhibits poor solvent resistance, stain resistance and poor surface hardness.

Attempts to combine these two chemistries has met with limited success. U. S. Patent no. 5,639,821 teaches the combination of a synthetic epoxy resin, a carboxy functional compound and a second unsaturated resin (such as a polyester) in order to obtain a coating which exhibits high flexibility and high hardness. The surface finish also possesses a very high gloss. The epoxy used in this patent consists of the molecular weight in the range of 1000 to 15,000. The functionality of the epoxy used in this patent is in the range of 1.5-5.0 milliequivalents of epoxy per gram of polymer. These elements contribute to the high gloss coating desired for their applications. Because of the dual resin system, the patentees teach that either thermal initiators or UV radiation may be optionally used to obtain a proper cure.

The problem addressed by the present invention, which has heretofore been unresolved by the known art, is the creation of a low gloss powder coating for use with heat sensitive substrates which exhibits very high surface hardness. It has been recently discovered that the combination of a specific type of epoxy resin along with a specific type of polyester resin along with a unique catalyzing system leads to a powder coating exhibit the desired combination of properties identified above.

### STATEMENT OF THE INVENTION

In accordance with the present invention, a melt extrudable low temperature curable powder coating composition suited for application onto heat sensitive substrates is provided which comprises a film-forming particulate blend of (a) an unsaturated polyester resin containing, on a weight percent basis, from 2 to 10 wt. % ethylenically unsaturated double bonds per molecule (b) a glycidyl functional acrylic resin having a molecular weight of from 5,000 to 100,000, (c) a crystalline or semi-crystalline polycarboxylic acid or polyanhydride, and, optionally, (d) a free-radical initiator and (d) a catalyst selected from the group consisting of a photoinitiator and a redox catalyst. Also provided in accordance with the invention are a coating comprising the inventive composition and articles coated therewith. It has been advantageously discovered that this composition provides an effective coating exhibiting the combined properties of low gloss and a hard, weather-resistant finish.

### DETAILED DESCRIPTION

Throughout this specification, the measurement of the quantities used in the various formulations will be stated in parts per hundred of the resin component (phr). The amount of resin will consist of the total amount of both resins in the formulation, that is, (a) plus (b).

The unsaturated polyester resin (a) of the present invention contains from 2 to 10 wt. % ethylenically unsaturated double bonds per molecule and at least one active hydrogen site per molecule. The term "active hydrogen" used herein means a hydrogen atom that is readily abstracted by free radicals in the curing reaction. Unsaturated polyester resins may be prepared via conventional means such as by the condensation of one or more ethylenically unsaturated polyfunctional carboxylic acids (or their anhydrides) having carboxyl functionalities of 2 or more with one or more active hydrogen containing polyols having hydroxyl functionalities of 2 or more. Although the active hydrogen in the unsaturated polyester resin (a) is typically supplied by the polyol, it may also come from active hydrogen containing acids employed in conjunction with the unsaturated acid.

Further, while the ethylenic unsaturation is typically supplied by the acid, it may also be provided by the polyol. The ethylenic unsaturation may be provided in the polymer backbone or at the end of the chain. The unsaturated polyesters may be carboxyl- or hydroxyl-terminated depending upon the monomer mixture ratio.

Examples of ethylenically unsaturated polyfunctional carboxylic acids (or their anhydrides) include maleic acid, fumaric acid, itaconic acid, tetrahydrophthalic acid, nadic acid and dimeric methacrylic acid. Maleic anhydride, fumaric acid, and mixtures thereof, are preferred because of economic considerations.

Examples of monofunctional acids for chain end unsaturation include acrylic acid and methacrylic acid.

The polyols with active hydrogens include polyols that contain at least one active methylene group or active methine group per molecule. If the active hydrogens are supplied by active methylene groups, the polyols may contain an active hydrogen atom attached to an allylic carbon or benzylic carbon. If the active hydrogens are supplied by active methine groups, the polyols may contain an active hydrogen atom attached to a cyclohexyl or tertiary alkyl carbon. Allylic, benzylic, cyclohexyl and tertiary alkyl hydrogen atoms are readily abstracted during free radical-induced curing to from the corresponding stable allylic, benzylic, cyclohexly or tertiary alkyl free radicals, all of which promote curing at the surface of the coating film.

Exemplary polyols having an allylic hydrogen include trimethylol propane monoallyl ether, trimethylol propane diallyl ether, vinyl cylohexanediol, etc. Examples of polyols having a benzylic hydrogen include benzene dimethanol. Polyols having a cyclohexyl hydrogen include cyclohexane dimethanol, cyclohexane diol, etc.

In addition, it is possible to supply the active hydrogen through the carboxylic acid. Examples of polyfunctional carboxylic acids with active hydrogens (i.e. active methylene groups) include carboxylic acids that include a malonyl hydrogen, such as malonic acid, or an allylic hydrogen, such as nadic anhydride, tetrahydrophthalic anhydride or dimer acid.

Often, polyols without active hydrogens are employed in the condensation reaction in conjunction with the active hydrogen containing polyols to provide various desired chemical and mechanical properties. Examples of such polyols without active hydrogens include ethylene glycol, diethylene glycol, triethylene glycol, propylene glycol, neopentyl glycol, butanediol, dodecanediol, hydrogenated bisphenol A, bisphenol A/propylene oxide adducts, gylcerol, trimethylolpropane and trimethylolethane.

In accordance with this invention, it is preferred that between 10 and 100 mole percent, and more preferably between 50 and 100 mole percent of the hydroxyl functionality relative to the total hydroxyl functionality of monomers used to form the unsaturated polyester resin (a) is provided by active hydrogen containing polyol monomers.

The unsaturated polyester resins of the invention are solid materials at room temperature, so that they can easily be formulated into non-blocking powders. Their Tg, or glass transition temperature, is in the range of 30° to 70°C, preferably 40° to 60°C and most preferably 45° to 55°C.

The preferred unsaturated polyester resins contain, on a weight percent basis, from 2 to 10 wt. %, preferably from 2 to 6 wt. %, ethylenically unsaturated bonds per molecule. The unsaturated polyester resins are used in the compositions of the invention in an amount of from 40 to 80 phr, preferably from 50 to 70 phr and more preferably from 55 to 65 phr.

The acrylic resin employed herein contains glycidyl functional groups. Exemplary is glycidyl methacrylate (GMA) resin. It is in the form of a (co)polymer which is produced by (co)polymerizing between 20 and 100 wt. % glycidyl acrylate or glycidyl methacrylate and between 0 and 80 wt. % other α, β-ethylenically unsaturated monomers, such as methyl methacrylate, butyl methacrylate and styrene. These resins have a weight average molecular weight of from 5,000 to 200,000, preferably from 5,000 to 100,000 and more preferably from 5,000 to 50,000. The weight average molecular weight is determined by gel permeation chromatography. The viscosity of the GMA resin is in the range of 10 to 500 poise, and preferably between 30 and 300 poise at 150°C, as determined by ICI Cone and Plate Viscometer.

GMA resin is prepared under traditional reaction conditions well known in the art. For example, the monomers can be added to an organic solvent such as xylene with the reaction conducted under reflux conditions in the presence of an initiator such as azobisisobutyronitrile or benzoyl peroxide. Such resins are commercially available under the trademark Isocryl EP-550 from Estron Chemical, Inc. of Calvert City, Kentucky. The amount of GMA resin present in the composition of the invention is in the range of 5 to 40 phr, preferably, 10 to 30 phr and most preferably, 10 to 20 phr.

The crystalline or semi-crystalline polycarboxylic acid or polyanhydride has an acid number of from 50 to 400, preferably from 60 to 150. Exemplary compounds in this group are sebacic acid, dodencanedicarboxylic acid, adipic acid and acid-functional polyesters. In the practice of this invention, such compound is added in an amount of from 5 to 40 phr, preferably from 10 to 30 phr and, most preferably, from 15 to 25 phr.

Free radical initiators (d) are used to generate the free radicals at the active hydrogen sites in order to initiate curing (via homopolymerization) of the unsaturated polyester resins. Examples of free radical initiators useful in the practice of this invention include peroxide and azo compounds. Examples of peroxide initiators include diacyl peroxides, such as benzoyl peroxide, peroxy esters, peroxy ketals, such as 1,1-bis(t-butylperoxy)-3,3,5-trimethylcyclohexane, peroxy esters, dialkylperoxides and ketone peroxides. Examples of azo compounds include azobis (alkyl nitrile) peroxy compounds. The free radical initiators of the inventive powder coating composition are present in amounts ranging from 0.1 to 10 phr, preferably 0.5 to 5 phr and most preferably, from 0.5 to 2 phr.

The photoinitiator catalysts which may be used in the present invention are employed to impart a rapid, radiation activated low temperature cure to the powder coating formulation. Examples of such initiators include benzoin and its derivatives, such as benzoin ethers, and benzoin ketals, for example, benzyl dimethyl ketal. Aryl ketones can also be used, such as 1-hydroxycyclohexyl phenyl ketone and perfluorinated diphenyl titanocene. Hydrogen abstraction free radical type photoinitiators can be used in combination with the above or alone. Examples include 4,4'-bisdimethylamino benzophenone, thioxanthone and benzophenone.

The amount of photoinitiators which may be used herein range from 0.1 and 10 phr, preferably 0.5 to 6 phr and most preferably 1 to 5 phr.

Redox catalysts may also be employed in place of the photoinitiators. These compounds induce the generation of free radicals from the intitiators through an oxidation-reduction reaction. As redox catalysts, transition metal compounds based on fatty acids or oils may be employed. Some examples include cobalt, manganese, lead, copper, vanadium and iron+2. Cobalt containing compounds, such as cobalt salts of monocarboxylic (i.e. fatty) acids, for example, cobalt octoate, cobalt neodencanoate, cobalt naphthenate, polymer bound cobalt and cobalt octadecanoate are most preferred. During curing, at the surface of the coating, even the free radicals formed at the active hydrogen sites tend to react with atmospheric oxygen to form hydroperoxides (i.e. inactivated peroxide initiators) which halt the curing reaction. However, these hydroperoxides so formed, due to their location, are now readily decomposed in the presence of the cobalt salts to re-initiate the free radical cure, thus allowing the cure to proceed to completion at the surface. This provides for the hard surface cure which was heretofore unavailable with low-gloss producing powder coatings. The redox catalysts are used in the powder coating formulation of this invention in amounts of from 0.1 to 2.0 phr, preferably from 0.1 to 1.0 phr and most preferably from 0.1 to 0.5 phr.

The powder coating composition of the invention may include additives customarily added to provide or enhance various functional or aesthetic properties. For instance, the coating formulation may be clear, possessing no pigment, or colored, containing in such case, up to 200 phr, or more customarily about 120 phr or less, of fillers or pigments. Examples of fillers include calcium carbonate, barium sulfate, wollastonite, mica, china clay and diatomaceous earth. Exemplary pigments include titanium dioxide and organic materials, such as carbon black.

Other common additives may be included, such as, flow control agents, dry flow additives, anticratering agents, texturing agents, light stabilizers, each of which may be present, as desired, in amounts up to 15 phr. Examples of flow control agents include acrylic resins and silicone resins. Examples of dry flow additives include fumed silica and alumina oxide. Examples of anticratering agents include benzoin, benzoin derivatives and phthalate plasticizers. Examples of texturing agents include organophilic clay and cross-linked rubber particles. Examples of light stabilizers include hindered amines and hindered phenols.

The powder coating of the present invention is produced by first dry blending all the components together and then melt blending them in a single or twin screw extruder at a temperature range above the melting point of the resin system. However, if the formulation includes a redox catalyst, this component is added to the post extrudate formulation. The extruded formulation is then cooled and broken into chips, ground in a mill with the particulates passed through a screen to produce powder particles of any desired size. The average particle size desired for electrostatic application is between 20 and 60 microns. Once the dry, free flowing powders are produced, they are ready for application onto the substrate to be coated.

The heat sensitive substrates for which the inventive powder coating was developed include wood products, in general. More specifically, these products include hardwood, hard board, laminates, composites, such as particle boards, low, medium or high density fiber-boards, masonite board and other materials which contain a significant amount of wood. Other heat sensitive substrates include plastics, polyolefins, polycarbonates, acrylics and nylons. The powder coatings of this invention may also be applied to various heat resistant substrates, such as metal, steel, aluminum, glass, and ceramics. The most preferred substrate, or article, for covering with the powder coating composition of the invention is medium density fiberboard (MDF), as this is the substrate most commonly used in the production of kitchen cabinet doors and panels, as well as various ready to assemble furniture.

The powder coatings of the invention are applied in the customary manner, that is, electrostatically, onto the target substrate. Electrostatic spray booths are employed which contain a number of corona discharge or triboelectric spray guns along with recirculation means for collecting oversprayed paint. Once the powder is applied to the surface of the target substrate it is exposed to a sufficient amount of heat to cause the powder to melt and flow out into a continuous film over the surface of the sprayed article. The powders of this invention are formulated to cure at low enough temperatures or for short enough times so as to not damage the heat sensitive coated articles. When photoinitiators are used to catalyze part of the resin formulation, an ultraviolet(UV) energy source is also employed in addition to a thermal source of energy. The UV energy source is preferably a UV lamp. An example of such an energy source is a fusion H lamp, having a 600 watt light source at a belt speed of 10 to 20 feet per minute.

The thermal cure temperatures of the powder coating composition of the invention are less than 300° F, and preferably at or below 250° F. Since curing the resins of the powder coating composition is a function of time versus temperature, longer oven residence times will be needed at lower temperatures and less residence time will be needed at higher temperatures. Preferably, full cure can be effected at a surface temperature of no more than 300° F for a period of time no more than 5 minutes.

The invention will now be described in greater detail by way of specific examples.

### EXAMPLES

Synthesis of unsaturated polyester resin containing active hydrogen:

| FORMULATION | | |
|---|---|---|
| | A | B |
| cyclohexane dimethanol (CHDM) | 1.7 moles | 1.6 moles |
| hydrogenated bisphenol-A (HBPA) | 0.3 moles | 0.4 moles |
| phthalic anhydride (PA) | 1.2 moles | 1.4 moles |
| fumaric acid (FA) | 1.0 moles | 0.8 moles |
| 4-methoxy phenol (MEHQ) | 50 ppm | 50 ppm |

### SYNTHESIS:

Charge CHDM and HBPA in a resin kettle fitted with a partial condenser, total condenser, stirrer, nitrogen inlet and temperature controller. Start heating the glycols in the kettle while stirring and maintaining nitrogen flow of about 25-30 ml per minute. When the glycols have melted at about 110-120°C, add the remaining ingredients into the kettle (PA, FA and MEHQ) and continue heating. When the temperature has reached about 155°C, water of esterification starts condensing and gets collected in the receiver. The temperature of the reactants in the kettle will rise slowly to the set temperature of 180°C, as esterification continues. When 85-90% of the theoretical distillate has been collected, vacuum is applied to remove the remainder of the water. The resin is then discharged into a pan, cooled, and ground into flakes to be used in the formulations. The polyester resins produced exhibited the following characteristics:

| | A | B |
|---|---|---|
| Acid number | 45 mg KOH/gm | 44 mg KOH/gm |
| ICI Viscosity @ 175°C | 40P | 47.5P |
| Glass Transition Temp. (Tg°C) | 47°C | 51°C |

### Example 1:

The polyester resin thus produced was then formulated into a powder coating composition. All of the ingredients shown below were weighed out in a polyethylene bag, blended together, and extruded through a single screw extruder, with chilled water circulating through the screw and barrel. The extruded chips were then broken into smaller pieces, ground in a Brinkman grinder and then screened through a Vertisiv C-7 200 mesh to produce very fine powder particles.

| | AMOUNTS (phr) | |
|---|---|---|
| INGREDIENTS | SAMPLE 1-1 | SAMPLE 1-2 |
| Polyester A | 60.0 | 60.0 |
| EP 550 | 20.0 | 35.0 |
| MORFLEX 1000 | 10.0 | 10.0 |
| Daiso ISO DAP | 10.0 | 10.0 |
| Spheriglass 3000E | 50.0 | 50.0 |
| Irgacure 2959 | 2.4 | 2.4 |
| Irgacure 651 | 0.6 | 0.6 |
| Vanox 231XL | 1.0 | 1.0 |
| Modaflow 2000 | 1.0 | 1.0 |
| Pigments | 0.535 | 0.535 |
| Lanco 1900 | 1.5 | 1.5 |
| Legend: EP 550: glycidyl functional acrylic resin available from Estron Chemical Co. MORFLEX 1000: semi-crystalline polyester resin, Rohm and Haas Co. Daiso ISO DAP: diallylisophthalate pre-polymer, Osaka Soda Co. Ltd. Spheriglass 3000E: borosilicate solid glass spheres, Potters Industries Irgacure 2959: an alpha-hydroxy ketone photoinitiator, Ciba Irgacure 651: a dimethyl ketal photoinitiator, Ciba Vanox 231XL: organic peroxide catalyst, Elf Atochem Modaflow 2000: acrylic flow modifier, Solutia, Inc. Pigments Lanco 1900: micronized polymeric surface modifier, Lubrizol Corp. | | |

### COATING EVALUATION

The functional performance of powder coating formulations 1-1 and 1-2 were evaluated on 1 inch thick 6" x 6" MDF panels after being applied and cured under the following conditions:
- Spray:: Nordson Corona Discharge Gun, 100KV
- Application: temperature: Preheat panels at 375°F for 10 minutes. Allow surface to rise to 225°F. Spray powder coating and wait until surface temperature reaches 180°F.
- Cure:: 375°F for 5 minutes followed by exposure to fusion H lamp, 600 watt at 20 ft/min. speed

### PROPERTIES:

| | 1-1 | 1-2 |
|---|---|---|
| Hot plate melt flow @300°F, in mm | 65 | 68 |
| Gel time @300°F, in sec | 95 | 85 |
| 60° Gloss, in units | 22 | 9 |
| MEK Rub Resistance, 50 double rubs (5= no rub off) | 5 | 5 |
| Appearance | Moderate Orange Peel | Moderate Orange Peel |

### EXAMPLE 2:

| | AMOUNTS (phr) | |
|---|---|---|
| INGREDIENTS | SAMPLE 2-1 | SAMPLE 2-2 |
| Polyester B | 60.0 | 60.0 |
| EP-550 | 20.0 | 25 |
| GMA 300 | ----- | 2.5 |
| MORFLEX 1000 | 10.0 | 10.0 |
| Modaflow 2000 | 1.0 | 1.0 |
| ISO-Dap | 10.0 | 10.0 |
| Luperco 231XL | 1.0 | 1.0 |
| Irgacure 651 | 0.64 | 0.64 |
| Irgacure 2959 | 2.36 | 2.36 |
| Pigments | 0.535 | 0.535 |

The above ingredients were then processed as in Example 1 to produce a powder coating formulation. And, as with Example 1, they were similarly coated onto MDF sample panels and evaluated. The results follow:

| | | |
|---|---|---|
| Coating Properties: | 2-1 | 2-2 |
| Hot plate melt flow @300°F, in mm | 65 | 58 |
| Gel time @300°F, in seconds | 81 | 99 |
| | | |
| ONLY Thermal cure: | | |
| <60°Gloss, in units | 27 | 19 |
| MEK Rub Resistance, 50 double rubs 3 3 | | |
| | | |
| Thermal AND UV Fusion H bulb―15 Ft/min: | | |
| <60°Gloss, in units | 36 | 23 |
| MEK Rub Resistance, 50 double rubs 5 5 | | |
| | | |
| Appearance | Moderate orange peel | Moderate orange peel |
| Standards: | | |
| MEK Rub Resistance: 3=moderate rub off 5=no rub off | | |

The above results demonstrate that the dual cure system produced a coating with low gloss and high surface hardness.

### EXAMPLE 3:

This example was prepared to show the benefit exhibited using an unsaturated polyester resin containing an active hydrogen compound versus a more conventional polyester resin utilized in the powder coating art.

| | AMOUNTS (phr) | |
|---|---|---|
| INGREDIENTS | SAMPLE 3-1 | Comparative |
| Polyester A | 60 | -- |
| Comparative PE resin | -- | 60 |
| EP 550 | 20.0 | 20.0 |
| Daiso-ISO DAP | 10.0 | 10.0 |
| Irgacure 651 | 0.64 | 0.64 |
| Irgacure 2959 | 2.36 | 2.36 |
| Vanox 231XL | 1.0 | 1.0 |
| Lanco 1900 Wax | 1.5 | 1.5 |
| Spheriglass 3000E | 50.0 | 50.0 |
| MORFLEX 1000 | 10.0 | 10.0 |
| Pigments | 0.54 | 0.54 |
| Modaflow 2000 | 1.0 | 1.0 |
| Legend: Comparative PE resin: formulated similar to Example A polyester except that neopentyl glycol was substituted for the CHDM EP 550: glycidyl functional acrylic resin, Estron Chemicals Diaso-ISO DAP: diallylisophthalate prepolymer, Osaka Soda Co. Irgacure 651: dimethyl ketal photoinitiator, Ciba Irgacure 2959: alpha hydroxy ketone photoinitiator, Ciba Vanox 231XL: organic peroxide catalyst, Elf Atochem Lanco 1900: micronized polymeric surface modifier, Lubrizol Spheriglass 3000E: borosilicate solid glass spheres, Potters Ind. MORFLEX 1000: semi-crystalline polyester, Rohm and Haas Corp. Pigments Modaflow 2000: acrylic flow modifier, Solutia, Inc. | | |

These resins were then formulated into powder coating compositions under the same process parameters as described for Examples 1 and 2.

| COATING PROPERTIES: | 3-1 | Comparative |
|---|---|---|
| Gel time @300°F, in seconds | 78 | 148 |
| Hot plate melt flow @300°F, in mm | 55 | 40 |
| MEK Rub Resistance, 50 double rubs | 5 | 3-4 |
| 60° gloss, in units | 14-18 | 19-20 |
| Appearance | Slight Orange Peel | Severe Outgassing |

From the foregoing examples, it is readily apparent that the combination of the specific resins employed with the combined thermal/photoinitiator catalyst cure system provides a novel powder coating for use on heat sensitive substrates.

### EXAMPLE 4:

This example was prepared to show that a fairly good cure can be obtained by using the specific polyester/epoxy/catalyst system of the invention with the addition of a redox catalyst. The desired low gloss surface finish was obtained, but there was a reduction in the durability of the final coating. For certain applications, such as non-horizontal surfaces like cabinet doors or vertical panels, surface wear resistance is not as important. What is surprising about this formulation is that a low gloss surface finish is obtained due to the unique interaction of the glycidyl containing resin and the semi-crystalline polyester.

| | Amounts in phr (unless otherwise noted) | |
|---|---|---|
| INGREDIENTS | 4-1 | 4-2 |
| Polyester A | 60 | 60 |
| EP550 | 30 | 30 |
| MORFLEX 1000 | 20 | 20 |
| Daiso ISO-DAP | 10 | 10 |
| Resiflow P67 | 1 | 1 |
| Vanox 231XL | 1 | 1 |
| Pigment | 20 | 20 |
| | | |
| Dryblended additives: | | |
| Cobalt Salt | -- | 1.5% |
| Process additive | .2% | .2% |
| Legend: EP 550: glycidyl functional acrylic resin from Estron Chemical. MORFLEX 1000: semi-crystalline polyester, Rohm and Haas Daiso ISO-DAP: diallylisophthalate prepolymer, Osaka Soda Co. Resiflow P67: commercially available flow modifier Vanox 231XL: organic peroxide catalyst, Elf Atochem Pigment: Titanium dioxide Cobalt Salt: commercially available as Intelomer 6054 Process additive: Aluminum oxide | | |

The resulting formulation was processed and then applied to MDF test panels as described above. The results are as follows:

| Coating Properties: | 4-1 | 4-2 |
|---|---|---|
| Hot Plate Melt Flow @ 300°F | 85mm | 85mm |
| Gel time @ 300°F | 90 sec | 83 sec |
| Gloss | 15 | 31 |
| MEK Resistance | 4 | 5 |
| Appearance | Very Smooth | Very Smooth |

## Claims

1. A powder coating composition for providing a low gloss surface finish comprising (a) an unsaturated polyester resin containing, on a weight percent basis, from 2 to 10wt. % ethylenically unsaturated double bonds per molecule, (b) a glycidyl functional acrylic resin having a weight average molecular weight of from 5,000 to 200,000, (c) a crystalline or semi-crystalline polycarboxylic acid or polyanhydride having an acid number of from 50 to 400, (d) a free radical initiator and, optionally, (e) a catalyst selected from the group consisting of a photoinitiator and a redox catalyst.

2. The composition of claim 1 wherein the unsaturated polyester resin comprises at least one active hydrogen site per molecule.

3. The composition of claim 1 wherein the glycidyl functional resin is comprised of, as polymerized units, between 20 and 100 wt. % glycidyl acrylate or glycidyl methacrylate and between 0 and 80 wt. % other α,β-ethylenically unsaturated monomers.

4. The composition of claim 1 wherein the free-radical initiator is present in the powder coating composition in an amount of from 0.1 to 10 phr.

5. The composition of claim 1 wherein the amount of crystalline or semi-crystalline polycarboxylic acid or polyanhydride is present in the powder coating composition in an amount of from 5 to 40 phr.

6. An article coated by the powder coating composition of claim 1 comprising a heat sensitive substrate.

7. The article of claim 6 wherein the heat sensitive substrate is medium density fiberboard.

8. A coating on a substrate provided by the powder coating composition of claim 1.

9. A method of coating a heat sensitive substrate comprising applying the powder coating composition of claim 1 to the substrate surface and heating to form a continuous film.

10. The method of claim 9 wherein the coating composition on the heat sensitive substrate is first subjected to thermal energy and then to ultra-violet radiation.
